# EUROPÄISCHE PATENTSCHRIFT

(11) **EP 1 632 397 B1**
(45) Veröffentlichungstag und Bekanntmachung des Hinweises auf die Patenterteilung: **12.11.2008**
(21) Anmeldenummer: 05018324.3
(22) Anmeldetag: 24.08.2005
(51) Int. Cl.: B60R 5/04

(54) **Ausziehbarer Ladeboden für ein Fahrzeug**
Extendable loading platform for a vehicle
Plateau de chargement extensible pour un véhicule

(30) Priorität: 27.08.2004 DE 102004041542
(43) Veröffentlichungstag der Anmeldung: 08.03.2006
(73) Patentinhaber: AB SKF, 415 50 Göteborg (SE)
(72) Erfinder: Wiesenau, Doreen, 97525 Schwebheim (DE); Edelmann, Ludwig, 97717 Sulzthal (DE); Genheimer, Christian, 97422 Schweinfurt (DE)
(74) Vertreter: Kohl, Thomas

(56) Entgegenhaltungen:
- DE-A1- 10 202 914
- DE-A1- 10 241 687
- US-A1- 2004 041 424
- US-A1- 2004 151 566

## Beschreibung

Die Erfindung betrifft einen ausziehbaren Ladeboden für ein Fahrzeug, insbesondere für einen Personenkraftwagen, der in einem Lade- oder Kofferraum angeordnet werden kann und der, vorzugsweise in Fahrtrichtung des Fahrzeugs, auf mindestens einem Linearlager verschiebbar angeordnet ist, wobei der Ladeboden aus mindestens zwei Teilen besteht und wobei jedes Teil in einer ersten Stellung, in der es zum Beladen benutzbar ist, und in einer zweiten Stellung, in der es nicht zum Beladen benutzbar ist, positionierbar ist.

Insbesondere bei Personenkraftwagen, die als Kombi, als Van oder als Geländewagen ausgeführt sind, besteht häufig der Bedarf, relativ schwere und sperrige Gegenstände zu transportieren. Das Ein- und Ausladen dieser Gegenstände gestaltet sich bei entsprechendem Gewicht dieser Gegenstände zumeist sehr schwierig, weil der Gegenstand über die Ladekante in den Lade- bzw. Kofferraum des Personenkraftwagens gehoben werden muss. Daher sind Ladeböden bekannt, die auf zumeist zwei Linearführungen bzw. Linearlagern gelagert sind und dadurch - in Fahrtrichtung des Fahrzeugs betrachtet - relativ zum Lade- bzw. Kofferraum verschiebbar sind. Zum Beladen des Lade- bzw. Kofferraums mit einem schweren Gegenstand wird der Ladeboden entgegen der Fahrtrichtung aus dem Lade- bzw. Kofferraum herausgezogen, so dass - mangels Störkanten - ein einfaches Heraufheben des einzuladenden Gegenstandes auf den Ladeboden erfolgen kann, was einfacher ist als den Gegenstand ins Innere des Personenkraftwagens zu heben. Ist der Gegenstand auf dem Ladeboden abgelegt, wird er auf diesem ins Innere des Lade- bzw. Kofferraums mittels der Linearführungen hineingeschoben; das Entladen erfolgt in entsprechend umgekehrter Reihenfolge.

Ausziehbare Ladeböden der eingangs genannten Art sind aus der DE 10 2004 007 138 A1 und aus der DE 10 2004 007 140 A1 bekannt. Dort ist vorgesehen, dass der ausziehbare Ladeboden aus mehreren plattenartig ausgebildeten Teilen besteht, die über Scharniere miteinander verbunden sind, so dass die Teile in eine Gebrauchsstellung positioniert werden können und auch - zwecks Freilegen der Nutzfläche des Kofferraums - in eine Nicht-Gebrauchsstellung geklappt werden können, in der die einzelnen Teile vertikal im Seitenbereich des Kofferraums hochgeklappt sind. In der Gebrauchsstellung ist die gesamte Fläche des Ladebodens als Einheit in Auszugsrichtung aus dem Kofferraum bewegbar.

In manchen Anwendungsfällen ist es gewünscht, einen ausziehbaren Ladeboden zur Verfügung zu haben. Allerdings wird dieser manchmal nur für zu transportierende Teile benötigt, die eine relativ kleine Auflagefläche im Kofferraum benötigen. In diesem Falle ist es nachteilig, dass der Ladeboden in seiner Gebrauchsstellung den gesamten Kofferraum abdeckt, wodurch der Kofferraum nicht mehr oder nur schlecht anderweitig genutzt werden kann. Der Kofferraumbereich, der nicht vom Ladegut, das auf dem Ladeboden gelagert wird, beansprucht wird, wird in seiner effektiven Höhe durch den Ladeboden um einige Zentimeter Höhe verringert.

Der Erfindung liegt daher die **Aufgabe** zugrunde, ein Fahrzeug mit einem ausziehbaren Ladeboden der eingangs genannten Art so weiterzubilden, dass der Ladeboden bei Bedarf nur partiell zur Verfügung steht, so dass ein Teilbereich des Kofferraums zwar mit einem ausziehbaren Ladeboden versehen ist, ein anderer Bereich des Kofferraums jedoch nicht von dem Ladeboden bedeckt ist. Dabei soll die zur Verfügung gestellte Ladebodenfläche in einfacher Weise festlegbar sein, d. h. ein schnelles Zurverfügungstellen des benötigten Ladebodens möglich werden.

Der Bereich des Kofferraums, in dem kein Ladeboden benötigt wird, soll keiner Beschränkung der Ladekapazität des Lade- bzw. Kofferraums unterliegen, wobei insbesondere die verfügbare Ladehöhe nicht beschränkt sein soll.

Die **Lösung** dieser Aufgabe durch die Erfindung ist dadurch gekennzeichnet, dass mindestens eines der Teile des Ladebodens an einer seiner Seiten mit einem ersten Linearlager in Verbindung steht und dass an der anderen Seite dieses Teils des Ladebodens ein zweites Linearlager befestigt ist, wobei für das zweite Linearlager im Lade- oder Kofferraum eine Auflagefläche vorhanden ist.

Damit wird es möglich, zumindest ein Teil des klappbar ausgebildeten Ladebodens mit in seinem Seitenbereich befestigten Linearlager hochzuklappen, was - wie später noch gesehen werden wird - eine besonders vorteilhafte Möglichkeit schafft, einen Teil des Ladebodens bei Bedarf im Kofferraum zu positionieren und ansonsten den Kofferraum frei von irgendwelchen Beschränkungen zu halten, die durch den Ladeboden bedingt sind.

Eine erste Weiterbildung sieht vor, dass mindestens ein Scharnier vorhanden ist, mittels dem mindestens eines der Teile des Ladebodens von der ersten Stellung, in der es zum Beladen benutzbar ist, in die zweite Stellung, in der es nicht zum Beladen benutzbar ist, klappbar ist. Dabei weist die Achse des Scharniers vorzugsweise in Verschieberichtung des Ladebodens. Weiterhin ist mit Vorteil vorgesehen, dass das Scharnier in mindestens eines der Linearlager integriert ist oder in unmittelbarer Nähe des Linearlagers angeordnet ist.

Bevorzugt besteht der Ladeboden aus zwei Teilen. Dabei kann die Fläche jedes Teils mindestens ein Drittel der Gesamtfläche des Ladebodens betragen; besonders bevorzugt ist vorgesehen, dass die Fläche jedes Teils die Hälfte der Gesamtfläche des Ladebodens beträgt.

Um ein sicheres Positionieren des hochgeklappten Ladebodens bzw. seiner Teile im Kofferraum zu bewerkstelligen, kann vorgesehen werden, dass Rastmittel vorhanden sind, die die Teile des Ladebodens in der zweiten Stellung, in der sie nicht zum Beladen benutzbar sind, in vertikal ausgerichteter Position halten.

Ladeböden der gattungsgemäßen Art werden zumeist für Gewichte ausgelegt, die im Bereich von etwa 150 kg liegen. Hierdurch ist es in sehr einfacher Weise möglich, relativ sperrige und schwere Gegenstände zu handhaben, beispielsweise eine Waschmaschine. Steht das Fahrzeug, in dem ein schwerer Gegenstand auf dem Ladeboden transportiert wird, in leicht geneigter Stellung, beispielsweise an einem Hang, hat dies zur Folge, dass eine nicht unerhebliche Horizontalkomponente der Gewichtskraft auf den Ladeboden wirkt, die versucht, den Ladeboden aus dem Lade- bzw. Kofferraum herauszuschieben. Unter besonders ungünstigen Umständen, d.h. wenn das Fahrzeug bergauf an einem Hang steht, kommt es unter Umständen zu einer unerwünschten Ausschubbewegung des Ladebodens entgegen Fahrtrichtung, wenn die Heckklappe des Personenkraftwagens geöffnet wird, was ein nicht unerhebliches Gefahrenpotential darstellt.

Um auch unter ungünstigen Betriebsbedingungen sicherzustellen, dass sich der Ladeboden relativ zum Lade- bzw. Kofferraum nicht in unerwünschter und unkontrollierter Weise bewegen kann, sieht eine Weiterbildung vor, dass der Ladeboden mit Mitteln versehen ist, mit denen er relativ zum Lade- oder Kofferraum unverschiebbar festgelegt werden kann. Insbesondere ist vorgesehen, dass die Mittel ein Wirkelement aufweisen, das zwischen dem Lade- oder Kofferraum und dem Ladeboden eine kraft-, reib- oder formschlüssige Verbindung herstellen kann.

Hiernach ist also bei einem vorbekannten Fahrzeug mit ausziehbarem Ladeboden vorgesehen, dass durch geeignete Mittel sichergestellt ist, dass sich der Ladeboden nicht in unerwünschter und unkontrollierter Weise relativ zum Lade- bzw. Kofferraum bewegen kann.

Bei Bedarf kann nur ein Teil, z. B. eine Hälfte, des Ladebodens in Nutzstellung geklappt werden. Wird der gesamte Ladeboden benötigt, wird auch der restliche Teil des Ladebodens in Nutzstellung geklappt. Dabei hat es sich bewährt, wenn eines der Teile des Ladebodens an seiner mit dem zweiten Linearlager versehenen Seite eine Auflagefläche für das mindestens eine weitere Teil des Ladebodens aufweist. Diese Auflagefläche kann insbesondere an einer der Führungsschienen des zweiten Linearlagers angeordnet sein.

Während grundsätzlich jeder Typ von Linearlagern zur Lagerung des Ladebodens in Frage kommt, hat es sich besonders bewährt, wenn das Linearlager zwei Führungsschienen aufweist, zwischen denen Wälzkörper, insbesondere Kugeln, angeordnet sind, die von einem Käfig geführt werden, der sich in Auszugsrichtung über eine definierte Länge erstreckt. Hiernach kommt ein Linearlager zum Einsatz, das nur für eine begrenzte Hubbewegung ausgelegt ist, bei der jedoch eine sehr solide und stabile Führung des Ladebodens relativ zum Lade- bzw. Kofferraum sichergestellt ist.

Es ergibt sich der Vorteil, dass im hochgeklappten Zustand des Ladebodens eine Abdeckung für die Radkästen des Kraftfahrzeugs geschaffen wird, die einen Stauraum für Zubehör definiert (Warndreieck, Verbandskasten, etc.), so dass im Falle dessen, dass der Ladeboden nicht benötigt wird, der verbleibende Lade- bzw. Kofferraum von derartigen Teilen frei gehalten wird. Dabei kann der hochgeklappte Ladeboden ansonsten vorhandene Abdeckelemente für die Radkästen ersetzen.

Mit dem Erfindungsvorschlag wird eine einfache und preiswert herstellbare Möglichkeit geschaffen, einen verfahrbaren Ladeboden im Lade- bzw. Kofferraum eines Fahrzeugs vorzusehen, der bei Bedarf außer Funktion gebracht werden kann, so dass der Lade- bzw. Kofferraum nicht in seiner Nutzhöhe beschränkt wird. Dabei kann jedoch auch eine nur teilweise Nutzung des Ladebodens ermöglicht werden; es kann namentlich nur der halbe Ladeboden in Nutzposition gebracht werden, während die andere Hälfte des Ladebodens hochgeklappt außer Funktion ist und damit der halbe Kofferraum ohne Einschränkungen konventionell nutzbar ist. Vorteilhaft ist es auch, dass in einfacher Weise die Reserveradmulde im Kofferraum mit der vorgeschlagenen Lösung überbrückbar ist.

In der Zeichnung ist ein Ausführungsbeispiel der Erfindung dargestellt. Es zeigen:
- Figur 1: in dreidimensionaler Ansicht einen Ladeboden in vollständig ausgeklapptem, d. h. nutzbarem Zustand in in den Kofferraum eines nicht dargestellten Fahrzeugs eingefahrenem Zustand,
- Figur 2: dieselbe Anordnung wie in Figur 1, wobei hier der Ladeboden aus dem Kofferraum herausgezogen ist,
- Figur 3: in dreidimensionaler. Ansicht den Ladeboden in nur teilweise ausgeklapptem, d. h. nutzbarem Zustand in in den Kofferraum eingefahrenem Zustand,
- Figur 4: dieselbe Anordnung wie in Figur 3, wobei hier der nutzbar gemachte Teil des Ladebodens aus dem Kofferraum herausgezogen ist,
- Figur 5: in dreidimensionaler Ansicht den Ladeboden in vollständig hochgeklapptem, d. h. nicht nutzbarem Zustand.

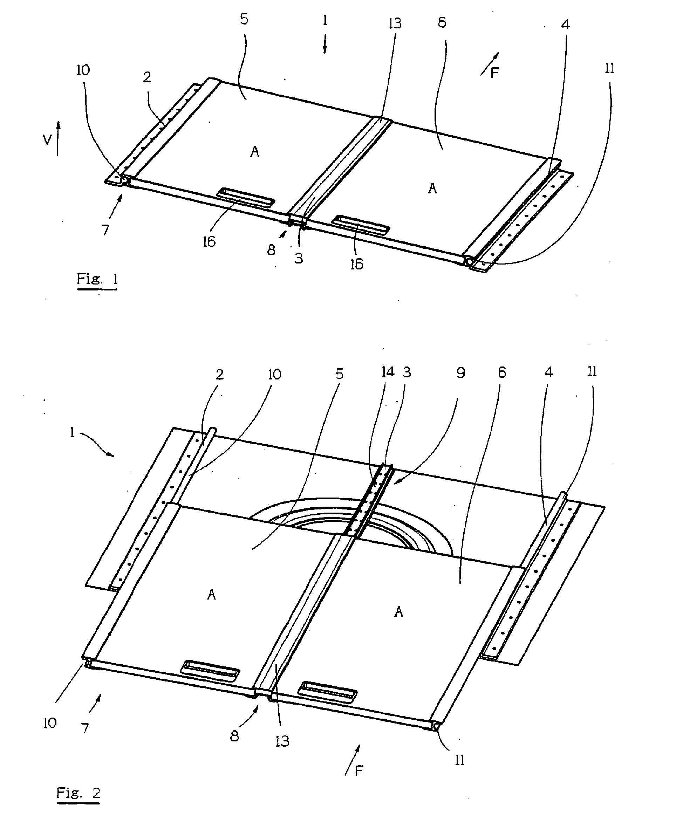

In Figur 1 ist ein Ladeboden 1 dargestellt, der in einem nicht näher dargestellten Kofferraum im hinteren Bereich eines Personenkraftwagens vorgesehen ist. Bei geöffneter Heckklappe des Personenkraftwagens kann der gesamte Ladeboden 1 entgegen der eingezeichneten Fahrtrichtung F des Fahrzeugs aus dem Kofferraum herausgezogen werden, um das Ein- und Ausladen von Gut zu erleichtern, das auf dem Ladeboden 1 liegend transportiert wird. Es sei erwähnt, dass der Ladeboden 1 auch so gelagert sein kann, dass er quer zur Fahrtrichtung F aus dem Kofferraum herausgezogen werden kann.

Der Ladeboden 1 weist zwei Teile 5 und 6 auf, die vorliegend etwa gleich groß sind. Jedes Teil 5, 6 stellt also etwa die Hälfte der Nutzfläche des gesamten Ladebodens 1 dar.

Beide Teile 5, 6 befinden sich in Figur 1 in einer Stellung A, die einer ersten Stellung der Teile 5, 6 entspricht, in der sich der Ladeboden 1 in seiner Nutzstellung befindet.

Damit der aus beiden Teilen 5, 6 bestehende Ladeboden 1 entgegen Fahrtrichtung F aus dem Kofferraum des Fahrzeugs herausgezogen werden kann, ist an den beiden seitlichen Endbereichen des Ladebodens 1 je ein Linearlager in Form einer Linearführung 2 und 4 angeordnet.

Wie in der Zusammenschau mit Figur 2 gesehen werden kann, erlauben die beiden Linearlager 2, 4 die Verschiebung des Ladebodens 1 entgegen Fahrtrichtung F.

Fig. 2 ist auch zu entnehmen, dass der Ladeboden 1 etwa in der Mitte zwischen den seitlichen Endbereichen von einem weiteren Linearlager 3 (zweites Linearlager) geführt wird. Dieses Linearlager 3 ist als komplette Einheit an der einen Seite 8 des Teils 5 des Ladebodens 1 angeordnet, d. h. an der Seite 8 am Teil 5 befestigt, z. B. angeschraubt. Weiterhin ist vorgesehen, dass die beiden Linearlager 2 und 4 so ausgebildet sind, dass sie ein Scharnier 10 bzw. 11 aufweisen, dessen Achse parallel zur Fahrtrichtung F weist. Das Scharnier 10 bzw. 11 kann in das Linearlager 2, 4 integriert sein, so dass das Lager gleichzeitig die Funktionen der Klappbarkeit und der Linearverschieblichkeit aufweist. Das Scharnier 10, 11 kann aber auch in der Nähe des Linearlagers 2, 4 benachbart als separates Bauteil vorgesehen werden.

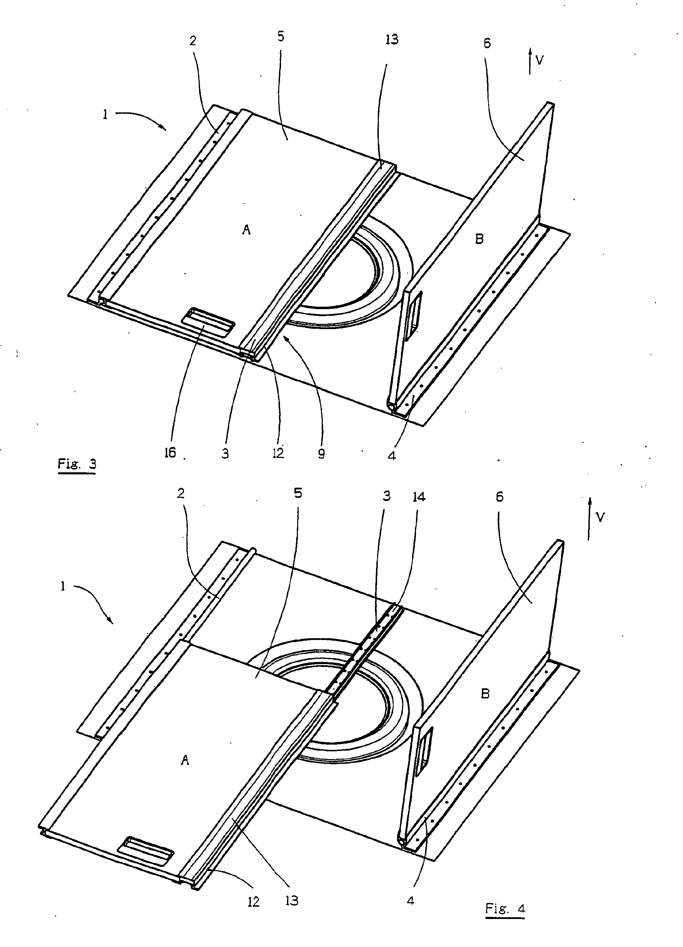

Mittels der beiden Scharniere 10, 11 können die beiden Teile 5, 6 von der in den Figuren 1 und 2 dargestellten Stellung A in eine Stellung B geschwenkt bzw. geklappt werden, in denen die Teile 5, 6 des Ladebodens 1 sich in einer Nicht-Nutzstellung befinden. In Fig. 3 und Fig. 4 ist zu sehen, dass sich der eine Teil 6 des Ladebodens 1 in dieser Nicht-Nutzstellung B befindet. Er ist im wesentlichen vertikal (Vertikale V) angeordnet, wobei nicht dargestellte Mittel dafür sorgen, dass er in dieser Ruhestellung lösbar eingerastet und gesichert wird.

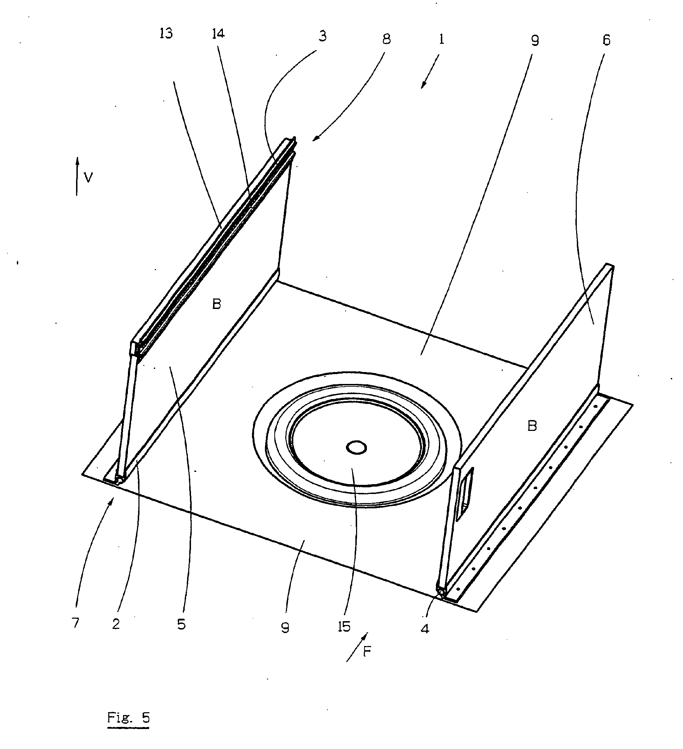

In Figur 5 ist der Ladeboden 1 in der Anordnung zu sehen, in der beide Teile 5, 6 des Ladebodens 1 in die zweite Stellung B hochgeklappt sind, in der Stellung also, in der der Ladeboden nicht benutzbar ist, der Kofferraum jedoch frei zugänglich ist. Zu sehen ist, dass eine Reserveradmulde 15 nunmehr freigelegt ist, die ansonsten in Stellung A von den Teilen 5, 6 des Ladebodens 1 abgedeckt ist.

In Figur 5 ist weiter zu sehen, dass sich in der Mitte zwischen den beiden Seiten des Ladebodens 1 eine Auflagefläche 9 befindet, die vorgesehen ist, um eine sichere Auflage für das zweite Linearlager 3 zu bilden, wenn der linke Teil 5 des Ladebodens 1 in die Nutzstellung A geklappt wird. In dieser Figur ist auch gut zu erkennen, dass das gesamte Linearlager 3 an der Seite 8 des Teils 5 angeordnet ist.

Das zweite Linearlager 3 weist zwei Führungsschienen 13 und 14 auf, die relativ zueinander translatorisch verschoben werden können. In Figur 4 ist zu sehen, wie das zweite Linearlager 3, d. h. namentlich dessen Führungsschiene 14 auf der Auflagefläche 9 aufliegt und es so dem Teil 5 des Ladebodens 1 ermöglicht, ohne Teil 6 entgegen Fahrrichtung F verschoben werden zu können.

Griffe 16 erleichtern das Fassen der Teile 5, 6 des Ladebodens 1 beim Herausziehen des Ladebodens 1 entgegen Fahrtrichtung F aus dem Kofferraum.

In den Figuren 3 und 4 ist weiter zu sehen, dass die Führungsschiene 13 des zweiten Linearlagers 3 eine Auflagefläche 12 aufweist, die so ausgebildet ist, dass sie für das seitliche Ende des Teils 6 im heruntergeklappten Zustand (Stellung A) eine sichere Auflage bietet.

Aus Figur 1 und 2 geht hervor, wie der gesamte Ladeboden 1 genutzt wird, d. h. beide Teile 5, 6 des Ladebodens 1 befinden sich in Stellung A und können mit zu transportierendem Gut beladen werden.

Die Figuren 3 und 4 zeigen indes, wie nur die Hälfte des Ladebodens 1 genutzt wird. Das rechte Teil 6 des Ladebodens 1 ist mittels des Scharniers 11 in die Vertikale V hochgeklappt, wodurch die rechte Hälfte des Kofferraums klassisch benutzbar ist.

Ist kein schweres Gut zu transportieren, kommt die in Figur 5 gezeigte Anordnung zur Anwendung. Hier sind beide Teile 5, 6 des Ladebodens 1 in die Vertikale hochgeklappt und in dieser Stellung gesichert (nicht dargestellt), wodurch der gesamte Kofferraum in klassischer Weise nutzbar ist.

### Bezugszeichenliste

- 1: Ladeboden
- 2: Linearlager
- 3: (zweites) Linearlager
- 4: Linearlager
- 5: Teil des Ladebodens
- 6: Teil des Ladebodens
- 7: Seite des Teils
- 8: Seite des Teils
- 9: Auflagefläche
- 10: Scharnier
- 11: Scharnier
- 12: Auflagefläche
- 13: Führungsschiene
- 14: Führungsschiene
- 15: Reserveradmulde
- 16: Griff

- F: Fahrtrichtung
- A: erste Stellung des Teils des Ladebodens (Nutzstellung)
- B: zweite Stellung des Teils des Ladebodens (Nicht-Nutzstellung)
- V: Vertikale

## Patentansprüche

1. Ausziehbarer Ladeboden (1) für ein Fahrzeug, insbesondere für einen Personenkraftwagen, der in einem Lade- oder Kofferraum angeordnet werden kann und der, vorzugsweise in Fahrtrichtung (F) des Fahrzeugs, auf mindestens einem Linearlager (2, 3, 4) verschiebbar angeordnet ist, wobei der Ladeboden (1) aus mindestens zwei Teilen (5, 6) besteht und wobei jedes Teil (5, 6) in einer ersten Stellung (A), in der es zum Beladen benutzbar ist, und in einer zweiten Stellung (B), in der es nicht zum Beladen benutzbar ist, positionierbar ist,
**dadurch gekennzeichnet,**
**dass** mindestens eines der Teile (5) an einer seiner Seiten (7) mit einem ersten Linearlager (2) in Verbindung steht und dass an der anderen Seite (8) dieses Teils (5) ein zweites Linearlager (3) befestigt ist, wobei für das zweite Linearlager (3) im Lade- oder Kofferraum eine Auflagefläche (9) vorhanden ist.

2. Ausziehbarer Ladeboden nach Anspruch 1, **gekennzeichnet durch** mindestens ein Scharnier (10, 11), mittels dem mindestens eines der Teile (5, 6) des Ladebodens (1) von der ersten Stellung (A), in der es zum Beladen benutzbar ist, in die zweite Stellung (B), in der es nicht zum Beladen benutzbar ist, klappbar ist.

3. Ausziehbarer Ladeboden nach Anspruch 2, **dadurch gekennzeichnet, dass** die Achse des Scharniers (10, 11) in Verschieberichtung des Ladebodens (1) weist.

4. Ausziehbarer Ladeboden nach Anspruch 2 oder 3, **dadurch gekennzeichnet, dass** das Scharnier (10, 11) in mindestens eines der Linearlager (2, 4) integriert ist oder in unmittelbarer Nähe des Linearlagers (2, 4) angeordnet ist.

5. Ausziehbarer Ladeboden nach einem der Ansprüche 1 bis 4, **dadurch gekennzeichnet, dass** der Ladeboden (1) aus zwei Teilen (5, 6) besteht.

6. Ausziehbarer Ladeboden nach Anspruch 5, **dadurch gekennzeichnet, dass** die Fläche jedes Teils (5, 6) mindestens ein Drittel der Gesamtfläche des Ladebodens (1) beträgt.

7. Ausziehbarer Ladeboden nach Anspruch 6, **dadurch gekennzeichnet, dass** die Fläche jedes Teils (5, 6) die Hälfte der Gesamtfläche des Ladebodens (1) beträgt.

8. Ausziehbarer Ladeboden nach einem der Ansprüche 1 bis 7, **dadurch gekennzeichnet, dass** Rastmittel vorhanden sind, die die Teile (5, 6) des Ladebödens (1) in der zweiten Stellung (B), in der sie nicht zum Beladen benutzbar sind, in vertikal ausgerichteter Position halten.

9. Ausziehbarer Ladeboden nach einem der Ansprüche 1 bis 8, **dadurch gekennzeichnet, dass** die Teile (5, 6) des Ladebodens (1) mit Mitteln versehen sind, mit denen sie relativ zum Lade- oder Kofferraum unverschiebbar festgelegt werden können.

10. Ausziehbarer Ladeboden nach einem der Ansprüche 1 bis 9, **dadurch gekennzeichnet, dass** eines der Teile (5) des Ladebodens (1) an seiner mit dem zweiten Linearlager (3) versehenen Seite (8) eine Auflagefläche (12) für das mindestens eine weitere Teil (6) des Ladebodens (1) aufweist.

11. Ausziehbarer Ladeboden nach Anspruch 10, **dadurch gekennzeichnet, dass** die Auflagefläche (12) an einer der Führungsschienen (13) des zweiten Linearlagers (3) angeordnet ist.

12. Ausziehbarer Ladeboden nach einem der Ansprüche 1 bis 11, **dadurch gekennzeichnet, dass** die Linearlager (2, 3, 4) zwei Führungsschienen (13, 14) aufweisen, zwischen denen Wälzkörper, insbesondere Kugeln, angeordnet sind, die von einem Käfig geführt werden, der sich in Verschieberichtung des Ladebodens (1) über eine definierte Länge erstreckt.

## Claims

1. An extendable loading platform (1) for a vehicle, in particular for an automobile, which can be arranged in a load space or luggage compartment and which is arranged so that it can be displaced, preferably in the direction of travel (F) of the vehicle, on at least one linear bearing (2,3,4), wherein the loading platform (1) comprises at least two parts (5,6) and wherein each part (5,6) can be positioned in a first position (A), in which it can used for loading, and in a second position (B) in which it cannot be used for loading,
**characterised in**
**that** at least one of the parts (5) is connected at one of its sides (7) to a first linear bearing (2), and in that a second linear bearing (3) is mounted on the other side (8) of this part (5), wherein a supporting surface (9) for the second linear bearing (3) is provided in the load space or luggage compartment.

2. An extendable loading platform according to Claim 1, **characterised by** at least one hinge (10,11), by means of which at least one of the parts (5,6) of the loading platform (1) can be swung from the first position (A), in which it can used for loading, into the second position (B) in which it cannot be used for loading.

3. An extendable loading platform according to Claim 2, **characterised in that** the axis of the hinge (10,11) faces in the displacement direction of the loading platform (1).

4. An extendable loading platform according to Claim 2 or 3, **characterised in that** the hinge (10,11) is integrated into at least one of the linear bearings (2,4) or is arranged in the immediate vicinity of the linear bearing (2,4).

5. An extendable loading platform according to any one of Claims 1 to 4, **characterised in that** the loading platform (1) comprises two parts (5,6).

6. An extendable loading platform according to Claim 5, **characterised in that** the area of each part (5,6) amounts to at least one third of the total area of the loading platform (1).

7. An extendable loading platform according to Claim 6, **characterised in that** the area of each part (5,6) amounts to half the total area of the loading platform (1).

8. An extendable loading platform according to any one of Claims 1 to 7, **characterised in that** detent means are provided which retain, in a vertically aligned position, the parts (5,6) of the loading platform (1) in the second position (B), in which in which it cannot be used for loading.

9. An extendable loading platform according to any one of Claims 1 to 8, **characterised in that** the parts (5,6) of the loading platform (1) are provided with means with which they can be located non-displaceably relative to the load space or luggage compartment.

10. An extendable loading platform according to any one of Claims 1 to 9, **characterised in that** one of the parts (5) of the loading platform (1) has on its side (8) provided with the second linear bearing (3) a mounting surface (12) for the at least one other part (6) of the loading platform (1).

11. An extendable loading platform according to Claim 10, **characterised in that** the mounting surface (12) is disposed on one of the guide rails (13) of the second linear bearing (3).

12. An extendable loading platform according to any one of Claims 1 to 11, **characterised in that** the linear bearings (2,3,4) have two guide rails (13,14), between which rolling elements, in particular balls, are provided, which are guided by a cage which extends over a defined length in the displacement direction of the loading platform (1).

## Revendications

1. Plateau de chargement (1) coulissant destiné à un véhicule, notamment une voiture particulière, qui peut être disposé dans un espace de chargement ou coffre à bagages et qui est installé sur au moins un palier linéaire (2, 3, 4), avec possibilité de déplacement en translation, de préférence dans le sens de la marche (F) du véhicule, le plateau de chargement (1) étant constitué d'au moins deux parties (5, 6) et chaque partie (5, 6) pouvant être amenée dans une première position (A), dans laquelle elle peut être utilisée pour le chargement, et dans une deuxième position (B) dans laquelle elle ne peut pas être utilisée pour le chargement, **caractérisé par le fait qu**'au moins une des parties (5) est reliée sur un de ses côtés (7) à un premier palier linéaire (2) et par le fait qu'un deuxième palier linéaire (3) est fixé sur l'autre côté (8) de ladite partie (5), une surface d'appui (9) étant prévue pour le deuxième palier linéaire (3), dans l'espace de chargement ou coffre à bagages.

2. Plateau de chargement coulissant selon la revendication 1, **caractérisé par le fait qu'**il comprend au moins une charnière (10, 11), à l'aide de laquelle au moins une des parties (5, 6) du plateau de chargement (1) peut être relevée de la première position (A), dans laquelle elle peut être utilisée pour le chargement, à la deuxième position (B), dans laquelle elle ne peut pas être utilisée pour le chargement.

3. Plateau de chargement coulissant selon la revendication 2, **caractérisé par le fait que** l'axe de la charnière (10, 11) est orienté dans le sens de coulissement du plateau de chargement (1).

4. Plateau de chargement coulissant selon la revendication 2 ou 3, **caractérisé par le fait que** la charnière (10, 11) est intégrée dans au moins un des paliers linéaires (2, 4) ou est disposée à proximité immédiate du palier linéaire (2, 4).

5. Plateau de chargement coulissant selon une des revendications 1 à 4, **caractérisé par le fait que** ledit plateau de chargement (1) se compose de deux parties (5, 6).

6. Plateau de chargement coulissant selon la revendication 5, **caractérisé par le fait que** la surface de chaque partie (5, 6) représente au moins un tiers de la surface totale du plateau de chargement (1).

7. Plateau de chargement coulissant selon la revendication 6, **caractérisé par le fait que** la surface de chaque partie (5, 6) représente la moitié de la surface totale du plateau de chargement (1).

8. Plateau de chargement coulissant selon une des revendications 1 à 7, **caractérisé par le fait qu'**il est prévu des moyens d'encliquetage qui maintiennent les parties (5, 6) du plateau de chargement (1) verticalement dans la deuxième position (B), dans laquelle elles ne peuvent pas être utilisées pour le chargement.

9. Plateau de chargement coulissant selon une des revendications 1 à 8, **caractérisé par le fait que** les parties (5, 6) du plateau de chargement (1) sont pourvues de moyens permettant de les immobiliser en translation par rapport à l'espace de chargement ou coffre à bagages.

10. Plateau de chargement coulissant selon une des revendications 1 à 9, **caractérisé par le fait que** l'une (5) des parties du plateau de chargement (1) présente, sur son côté (8) muni du deuxième palier linéaire (3), une surface d'appui (12) pour la partie (6) supplémentaire, au nombre d'au moins une, du plateau de chargement (1).

11. Plateau de chargement coulissant selon la revendication 10, **caractérisé par le fait que** la surface d'appui (12) est disposée sur l'un des rails de guidage (13) du deuxième palier linéaire (3).

12. Plateau de chargement coulissant selon une des revendications 1 à 11, **caractérisé par le fait que** les paliers linéaires (2, 3, 4) présentent deux rails de guidage (13, 14) entre lesquels sont disposés des corps roulants, en particulier des billes, qui sont guidés par une cage s'étendant sur une longueur définie dans le sens de coulissement du plateau de chargement (1).
